# EUROPÄISCHE PATENTSCHRIFT

(11) **EP 0 468 383 B1**
(45) Veröffentlichungstag und Bekanntmachung des Hinweises auf die Patenterteilung: **11.01.1995**
(21) Anmeldenummer: 91112164.8
(22) Anmeldetag: 20.07.1991
(51) Int. Cl.: B23Q 16/00, B23Q 3/02, F16B 1/00

(54) **Positioniervorrichtung**
Positioning device
Dispositif de positionnement

(30) Priorität: 25.07.1990 DE 4023583
(43) Veröffentlichungstag der Anmeldung: 29.01.1992
(73) Patentinhaber: Gebr. Heller Maschinenfabrik GmbH, D-72622 Nürtingen (DE)
(72) Erfinder: Schweizer, Ernst, W-7440 Nürtingen (DE); Kalestra, Horst, W-7441 Neckartenzlingen (DE)
(74) Vertreter: Jackisch-Kohl, Anna-Katharina

(56) Entgegenhaltungen:
- DE-A- 3 831 736
- FR-A- 2 527 707
- FR-A- 2 591 923

## Beschreibung

Die Erfindung betrifft eine Positioniervorrichtung nach dem Oberbegriff des Anspruches 1.

Bei dieser bekannten Positioniervorrichtung (WO-A-88/10172) ist das Positionierteil eine Kugel, die in montierter Lage auf dem Öffnungsrand einer Membran einer das Einsatzteil bildenden Membranhülse aufliegt, die auf eine weitere Hülse geschraubt ist. Der Öffnungsrand bildet die Zentrierfläche. Die Membran wird beim Positionieren durch die Kugel elastisch durchgedrückt. Da die Membran verhältnismäßig weich ist, kann sie nur entsprechend geringe Vorspannkräfte übertragen. Darum lassen sich nur verhältnismäßig leichte Bauteile Positionieren. Da die ebene Membran elastisch durchgedrückt wird, verringert sich ihr Außendurchmesser, so daß sie nicht mehr an der sie umgebenden Wand der Vertiefung des Bauteiles anliegt. Hohe Querkräfte lassen sich dadurch bei der Positionierung nicht übertragen. Nachteilig ist insbesondere, daß eine Positionierung nur bei horizontalen Fügeflächen möglich ist, da bei einer Schräg- oder gar Vertikallage der Fügeflächen die weiche Membran nach unten weggebogen wird und eine Zentrierwirkung nicht mehr ausüben kann.

Außerdem besteht bei der Herstellung der Gewindehülse und der Membranhülse die Gefahr, daß Fertigungsfehler auftreten und dadurch die Membran in der Einbaulage nicht genau zentrisch ausgerichtet ist. In diesem Fall kann über das Positionierteil eine hohe Positioniergenauigkeit nicht erreicht werden.

Der Erfindung liegt die Aufgabe zugrunde, eine Positioniervorrichtung dieser Art so auszubilden, daß ein automatisches Ausrichten auch gewichtsmäßig schwerer Bauteile auf einfache Weise und mit hoher Wiederholungsgenauigkeit bei unterschiedlichen Lagen der Fügeflächen möglich ist.

Diese Aufgabe wird bei der gattungsgemäßen Positioniervorrichtung erfindungsgemäß mit den kennzeichnenden Merkmalen des Anspruches 1 gelöst.

Infolge der erfindungsgemäßen Ausbildung wird durch die Tellerfeder eine optimale Vorspannkraft erhalten. Mit der Tellerfeder können sehr hohe Vorspannkräfte erzeugt werden, so daß auch gewichtsmäßig schwere Bauteile einwandfrei und hochgenau positioniert werden können. Die Tellerfeder hat darüberhinaus eine hohe Querkraftsteifigkeit, so daß selbst bei vertikalem Anbau große unterschiedliche Gewichte von den Positionierelementen aufgenommen werden können, ohne ein Verändern der relativen Lage der zu positionierenden Maschinenteile befürchten zu müssen. Mit der Tellerfeder kann praktisch jede beliebige Vorspannkraft eingestellt werden. Dadurch ist es möglich, die Bauteile oder Fügeteile auch automatisch gegeneinander auszurichten. Voraussetzung für ein hochgenaues automatisches Fügen ist eine feine Abstimmung der Vorspannung. Die erfindungsgemäße Positioniervorrichtung kann mit geringsten Kosten hergestellt werden, da nur konstruktiv einfache Teile verwendet werden. Da die Positioniervorrichtung durch die Vorspannung selbstzentrierend ist, kann der Fügevorgang mit höchster Wiederholgenauigkeit erfolgen. Da die Tellerfeder im unverformten Zustand kegelförmig ausgebildet ist, wird ihr Außendurchmesser beim elastischen Durchdrücken vergrößert. Dadurch wird eventuell vorhandenes radiales Restspiel zwischen der Tellerfeder und der Vertiefung zuverlässig ausgeschaltet. Die Tellerfeder wird mit ihrem Außenrand infolge der elastischen Verformung fest gegen die Seitenwand der Vertiefung gedrückt, so daß die Querkraftübertragung beim Positionieren optimal ist.

Bevorzugte Ausgestaltungen der Erfindung ergeben sich aus den weiteren Ansprüchen.

Die Erfindung wird anhand zweier in der Zeichnung dargestellter Ausführungsbeispiele näher erläutert. Es zeigen
- Fig. 1: eine erfindungsgemäße Positioniervorrichtung im Axialschnitt und in Einbaulage,
- Fig. 2: eine zweite Ausführungsform einer erfindungsgemäßen Positioniervorrichtung in einer Darstellung entsprechend Fig. 1.

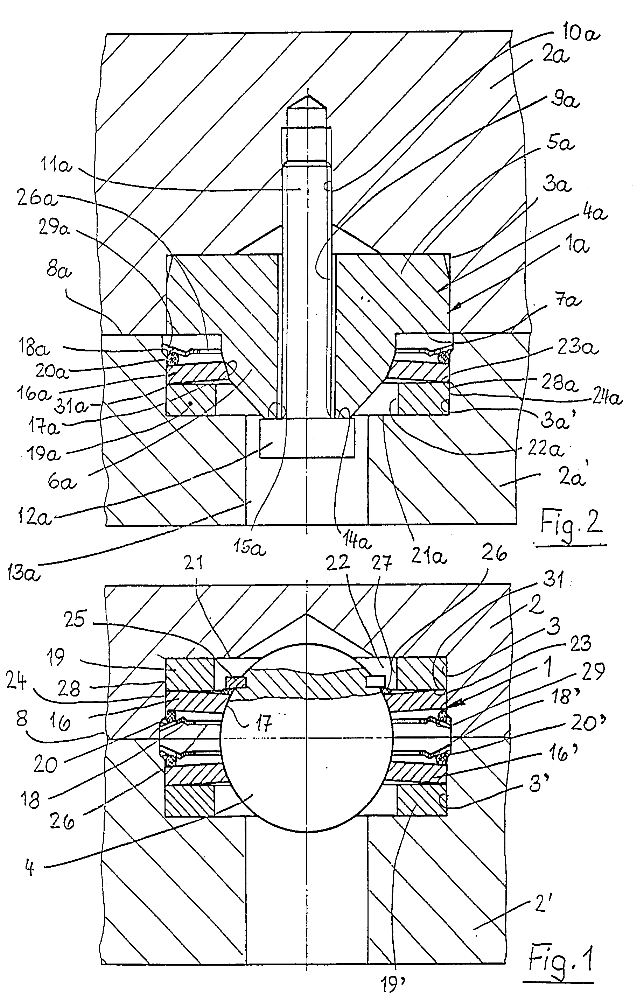

Die Positioniervorrichtung 1, 1a nach den Fig. 1 und 2 dient zum Positionieren zweier miteinander zu verbindender Maschinenteile 2, 2'; 2a, 2a', insbesondere von Werkzeugmaschinen. Die Positioniervorrichtungen liegen in miteinander fluchtenden Vertiefungen 3, 3'; 3a, 3a' der Maschinenteile.

Bei der Ausführungsform gemäß Fig. 1 weist die Positioniervorrichtung 1 ein Positionierteil 4 in Form einer Kugel auf. Der Positionierteil 4 ragt in der Einbaulage gemäß Fig. 1 in die beiden Vertiefungen 3, 3' der Bauteile 2, 2'. In diesen beiden Vertiefungen 3 und 3' sind zwei Positioniersätze untergebracht, die spiegelsymmetrisch zueinander angeordnet sind. In der Vertiefung 3 des Bauteiles 2 ist ein Abstimmring 19, eine Tellerfeder 16, ein Vorspannelement 20 und ein Sicherungsteil 18 angeordnet. In der anderen Vertiefung 3' liegt der zweite Positioniersatz mit dem Abstimmring 19', der Tellerfeder 16', dem Vorspannelement 20' und dem Sicherungsteil 18'. Die beiden Positioniersätze liegen auch spiegelsymmetrisch zu einer Fügefuge 8 zwischen den beiden Bauteilen 2 und 2' sowie konzentrisch zum Positionierteil 4. Um ihn unverlierbar an dem einen Positioniersatz 16, 18, 19, 20 zu halten, ist ein Haltering 25, vorzugsweise ein Seegerring, vorgesehen. Er greift auf der von der Tellerfeder 16' abgewandten Seite in eine Ringnut des Positionierteiles 4 benachbart zur Tellerfeder 16 ein. Der Haltering 25 hat Abstand vom benachbarten Öffnungsrand 26 des Abstimmringes 19. Zwischen dem Haltering 25 und der Tellerfeder 16 ist ein O-Ring 27 als Dicht- und Vorspannelement angeordnet, das am Positionierteil 4 anliegt. Es wird vorteilhaft, wie in Fig. 1 dargestellt, am auszuwechselnden Bauteil 2 gehalten.

Die kegelförmigen Tellerfedern 16, 16' wirken als Vorspannteile, die in Einbaulage der Positioniervorrichtung 1 auf die Bauteile 2, 2' eine Vorspannkraft ausüben.

Da die beiden Positioniersätze in den Vertiefungen 3 und 3' gleich ausgebildet sind, wird im folgenden nur der eine Positioniersatz näher beschrieben.

Die Tellerfeder 16 hat eine zentrale Öffnung, in die das Positionierteil 4 ragt. Der Öffnungsrand 17 der Tellerfeder liegt an dem kugelförmigen Positionierteil 4 an.

Das Sicherungsteil 18 ist vorzugsweise ein Seegerzackenring. Das Vorspannelement 20 ist vorzugsweise ein O-Ring, mit dem die Tellerfeder 16 und die Abstimmscheibe 19 in gegenseitiger Anlage gehalten werden.

Der Abstimmring 19 liegt plan auf dem Boden 21 der Vertiefung 3 auf. Mit seiner äußeren Mantelfläche 28 liegt er an der Seitenwand der Vertiefung 3 an. Durch die Ringöffnung 22 des Abstimmringes 19 ragt das Positionierteil 4. Mit dem Abstimmring 19 kann die Höhe der von der Tellerfeder 16 erzeugten Vorspannkraft sehr genau eingestellt werden; hierzu muß nur die Dicke des Abstimmringes entsprechend gewählt werden. Somit kann durch die Dicke der Abstimmscheibe 19 eine optimale Anpassung bzw. Einstellung der im Einsatz der Positioniervorrichtung 1 erzielbaren Querkräfte des zu positionierenden Bauteiles 2 erreicht werden.

Auf dem Abstimmring 19 liegt die Tellerfeder 16 an ihrem äußeren Rand 23 auf. Das Positionierteil 4 nimmt vor dem Aufsitzen des Maschinenteiles 2 auf dem Maschinenteil 2' infolge der beschriebenen Anordnung eine exakte Lage ein. Damit die Tellerfeder 16 auf der planen Auflagefläche des Abstimmringes 19 einwandfrei aufliegt, wird die Tellerfeder an ihrem äußeren Rand 23 an ihrer Auflageseite mit einer Planauflagefläche 31 versehen. Dadurch liegt die Tellerfeder flächig auf der Abstimmscheibe 19 auf. Außerdem hat die Tellerfeder 16 einen äußeren Zylindermantel 24, mit dem die Tellerfeder an der Seitenwand der Vertiefung 3 anliegt. Infolge des Zylindermantels 24 läßt sich die Tellerfeder einfach und schnell spielfrei in die Vertiefung 3 einlegen und aus ihr auch wieder ausbauen. Der Zylindermantel 24 bildet eine Paßfläche, mit der die Tellerfeder 16 an der Seitenwand der Vertiefung 3 anliegt.

Das ringförmige Sicherungsteil 18 liegt unter Zwischenlage des Vorspannelementes 20 auf der Tellerfeder 16. Die Vertiefung 3 des Bauteiles 2 ist an ihrem dem Bauteil 2' zugewandten Ende erweitert. Das Sicherungsteil 18 liegt mit seinem Rand an der Seitenwand dieses erweiterten Bereiches der Vertiefung 3 an. Das Sicherungsteil 18 ist vorteilhaft als Zackenring ausgebildet, der sich mit seinen längs des äußeren Randes versehenen Zacken in der Seitenwand des erweiterten Bereiches der Vertiefung 3 verkrallen kann. Dadurch sitzt das Sicherungsteil 18 unverlierbar in der Vertiefung 3.

Das Vorspannelement 20 liegt zwischen einem kegelförmigen Rand 29 des Sicherungsteiles 18 und der Tellerfeder 16. Da der kegelförmige Rand 29 in Richtung auf die Tellerfeder 16 geneigt ist, erfährt das Vorspannelement 20 durch diesen Rand 29 eine radial nach außen gerichtete Kraft, so daß das Vorspannelement 20 einwandfrei in Anlage an der Seitenwand der Vertiefung 3 gehalten wird. Das Sicherungsteil 18 verhindert zuverlässig, daß die Tellerfeder 16 in nichtmontiertem Zustand der Positioniervorrichtung aus der Vertiefung 3 herausfällt. Das Sicherungsteil 18 hat eine Durchstecköffnung 26 für das Positionierteil 4, das es mit Abstand umgibt.

Bei nur einmaligem Montageeinsatz, also bei nichtautomatischem Fügen der Bauteile, kann das kugelförmige Positionierteil 4 auch ohne den Haltering 25 bzw. die durch ihn bewirkte Halterung am Positioniersatz 16, 18, 19, 20 angeordnet werden. Die Tellerfedern 16, 16' werden so in die vorgefertigten Vertiefungen 3, 3' eingelegt, daß beim Zusammenfügen der Maschinenteile 2, 2' das kugelförmige Positionierteil 4 die kegelförmigen Tellerfedern 16, 16' in Richtung auf ihre ebene Form elastisch verformt. Dadurch wird der Außendurchmesser der Tellerfedern 16, 16' vergrößert, so daß sie fest gegen die Seitenwände der Vertiefungen 3, 3' gedrückt werden. Auf diese Weise können sehr hohe Querkräfte übertragen werden. Außerdem ist eine absolute Spielfreiheit infolge der beschriebenen Verformung gegeben, weil ein evtl. Spiel der Tellerfedern 16, 16' in den Vertiefungen 3, 3' durch die elastische Verformung der Tellerfeder auf jeden Fall ausgeschaltet wird. Schließlich sind die Tellerfedern 16, 16' relativ steif, so daß sehr hohe Vorspannkräfte erzielt werden können.

Bei der Ausführungsform gemäß Fig. 2 liegt das Positionierteil 4a mit einem ringscheibenförmigen Befestigungsabschnitt 5a formschlüssig in der Vertiefung 3a des Maschinenteiles 2a und ragt mit einem kegelförmigen Abschnitt 6a, der auch kalottenförmig ausgebildet sein kann, in die gegenüberliegende Vertiefung 3a' des anderen Bauteiles 2a'. Der Kegelabschnitt 6a ist vorzugsweise einstückig mit dem Befestigungsabschnitt 5a ausgebildet und ragt mittig über dessen Stirnseite 7a. Sie liegt in einer Ebene mit der zwischen den Bauteilen 2a, 2a' gebildeten Fügefuge 8a.

Das Positionierteil 4a weist eine zentrische Durchgangsbohrung 9a auf. Sie fluchtet mit einer Gewindebohrung 10a des Bauteiles 2a. In die Gewindebohrung 10a ist eine Schraube 11a geschraubt, mit der das Positionierteil 4a am Bauteil 2a befestigt ist.

Die Positioniervorrichtung 1a weist lediglich ein einziges Vorspannteil auf, das durch die kegelförmige Tellerfeder 16a gebildet wird. Sie übt in Einbaulage der Positioniervorrichtung 1a eine auf das Bauteil 2a wirkende Vorspannkraft aus.

Das Positionierteil 4a ragt mit seinem kegelförmigen Abschnitt 6a durch die zentrale Öffnung der Tellerfeder 16a. Der Öffnungsrand 17a der Tellerfeder 16a liegt auf dem Mantel eines gedachten Kegels, der sich in Richtung auf das Bauteil 2a erweitert. Er hat jedoch entgegengesetzte Neigung wie die Tellerfeder 16a selbst, die mit dem Öffnungsrand 17a auf dem kegelförmigen Abschnitt 6a des Positionierteiles 4a aufliegt. Vorzugsweise beträgt der Kegelwinkel des Öffnungsrandes 17a 40 °. Er kann aber je nach Einsatzfall auch größer oder kleiner sein. Je geringer der Kegelwinkel des Öffnungsrandes 17a ist, desto größer sind die bei Belastung der Tellerfeder 16a erreichbaren Querkräfte.

Die Positioniervorrichtung 1a hat ferner das Sicherungsteil 18a, das vorzugsweise durch einen Seegerzackenring gebildet wird. Ferner hat die Positioniervorrichtung 1a die Abstimmscheibe bzw. den Abstimmring 19a und das vorzugsweise als O-Ring ausgebildete Vorspannelement 20a, mit dem die Tellerfeder 16a und die Abstimmscheibe 19a in gegenseitiger Anlage gehalten werden.

Der Abstimmring 19a liegt plan auf dem Boden 21a der Vertiefung 3a' auf. Mit seiner äußeren Mantelfläche 28a liegt er an der Seitenwand der Vertiefung 3a' an. Durch die Ringöffnung 22a des Abstimmringes 19a ragt der kegelförmige Abschnitt 6a des Positionierteiles 4a. Mit dem Abstimmring 19a kann wiederum die Höhe der von der Tellerfeder 16a erzeugten Vorspannkraft genau eingestellt werden. Es muß die Dicke des Abstimmringes 19a entsprechend gewählt werden, so daß eine optimale Anpassung bzw. Einstellung der im Einsatz der Positioniervorrichtung 1a erzielbaren Querkräfte des zu positionierenden Bauteiles 2a erreicht werden.

Die Tellerfeder 16a liegt mit ihrem äußeren Rand 23a auf dem Abstimmring 19a auf. Das Positionierteil 4a nimmt mit seinem kegelförmigen Abschnitt 6a vor dem Aufsetzen des Bauteiles 2a auf dem Bauteil 2a' infolge der beschriebenen Anordnung eine genaue Lage ein. An ihrem äußeren Rand 23a liegt die Tellerfeder 16a mit der Planauflagefläche 31a flächig auf der planen bzw. ebenen Auflagefläche des Abstimmringes 19a einwandfrei auf. Der äußere Zylindermantel 24a der Tellerfeder 16a bildet eine Paßfläche, mit der die Tellerfeder an der Seitenwand der Vertiefung 3a' anliegt. Außerdem läßt sich die Tellerfeder 16a infolge des äußeren Zylindermantels 24a einfach und schnell spielfrei in die Vertiefung 3a' einlegen und aus ihr ausbauen.

Das ringförmige Sicherungsteil 18a liegt unter Zwischenlage des Vorspannelementes 20a auf der Tellerfeder 16a auf. Die längs des äußeren Randes vorgesehenen Zacken des Sicherungsteiles 18a können sich in der Seitenwand der Vertiefung 3a' verkrallen, so daß es unverlierbar in der Vertiefung sitzt.

Das Vorspannelement 20a liegt entsprechend der vorigen Ausführungsform zwischen dem kegelförmigen Rand 29a des Sicherungsteiles 18a und der Tellerfeder 16a. Da der kegelförmige Rand 29a in Richtung auf die Tellerfeder 16a geneigt ist, erfährt das Vorspannelement 20a durch diesen Rand eine radial nach außen gerichtete Kraft, so daß das Vorspannelement 20a einwandfrei in Anlage an der Seitenwand der Vertiefung 3a' etwa in Höhe des Überganges zum erweiterten Bereich der Vertiefung gehalten wird. Das Sicherungsteil 18a verhindert zuverlässig, daß die Tellerfeder 16a im nichtmontierten Zustand der Positioniervorrichtung 1a aus der Vertiefung 3a' herausfällt.

Das Sicherungsteil 18a hat die Durchstecköffnung 26a für den kegelförmigen Abschnitt 6a des Positionierteiles 4a, das es mit Abstand umgibt.

Die beschriebenen Positioniervorrichtungen 1, 1a sind an sämtlichen Schnittstellen einsetzbar, an denen Maschinenteile montiert, umgerüstet oder automatisch ausgewechselt werden, wobei eine sehr hohe Wiederholgenauigkeit sichergestellt ist. Mit den beschriebenen Positioniervorrichtungen 1, 1a lassen sich, obwohl sie aus konstruktiv einfach gestalteten Teilen bestehen, Wiederholgenauigkeiten von 0,002 mm ohne Schwierigkeiten erreichen. Die Tellerfedern 16, 16', 16a gewährleisten axial bzw. senkrecht zur Fügefläche 8, 8a einen relativ großen Federweg. Durch Veränderung der Dicke der Abstimmscheiben 19, 19', 19a kann mit den beschriebenen Positioniervorrichtungen die entsprechend dem Gewicht des zu positionierenden Bauteiles 2, 2a erforderliche Vorspannkraft sehr feinfühlig eingestellt werden. Da sich die Vorspannkraft sehr fein einstellen läßt, können die Bau- bzw. Maschinenteile hochgenau, auch automatisch, gefügt bzw. zueinander positioniert werden. Die Vorspannung läßt sich einfach so einstellen, daß beim Aufsetzen des Bauteiles 2, 2a auf dem Bauteil 2', 2a' nur ein geringer Spalt zwischen den Bauteilen verbleibt, der dann durch Anziehen der (nicht dargestellten) Verbindungsmittel, z.B. Schrauben, geschlossen wird, so daß die Bauteile 2, 2' und 2a, 2a' in ihrer endgültigen Lage aufeinandersitzen.

Parallel zur Fügefläche 8, 8a haben die Tellerfedern eine sehr hohe Querkraftsteifigkeit. Sie bewirkt, daß selbst bei schrägem oder gar vertikalem Anbau des zu positionierenden Bauteiles große unterschiedliche Gewichte aufgenommen werden können, ohne daß die Lage des zu positionierenden Bauteiles infolge seines Gewichtes verändert wird. Die Radial- oder Querkraftsteifigkeit der Tellerfedern kann durch entsprechendes Vorspannen erhöht werden.

## Patentansprüche

1. Positioniervorrichtung zum Positionieren zweier Bauteile (2, 2'; 2a, 2a'), insbesondere Maschinenteile von Werkzeugmaschinen, zueinander, mit zwei Bauteilen (2, 2'; 2a, 2a'), die an Fügeflächen (8, 8a) Vertiefungen (3, 3'; 3a, 3a') aufweisen, mit einem Positionierteil (4, 4a) und mindestens einem eine zentrale Öffnung aufweisenden Einsatzteil (16, 16'; 16a), die jeweils in den Vertiefungen (3, 3', 3a, 3a') der Bauteile (2, 2'; 2a, 2a') liegen, wobei das Positionierteil (4, 4a) an der vom Rand der Öffnung gebildeten Zentrierfläche (17, 17a) anliegt und das Einsatzteil (16, 16'; 16a) an der Seitenwand der Vertiefung (3, 3'; 3a') anliegt und beim Zusammenfügen der Bauteile (2, 2'; 2a, 2a') elastisch verformbar ist,
dadurch gekennzeichnet, daß die Zentrierfläche (17, 17a) an einer Tellerfeder (16, 16'; 16a) als Einsatzteil vorgesehen ist, die sich beim Zusammenfügen der Bauteile (2, 2'; 2a, 2a') in Richtung auf ihre ebene Form elastisch verformt und sich mit ihrem Außenrand (24, 24a) an der Seitenwand der Vertiefung (3, 3', 3a') abstützt.

2. Vorrichtung nach Anspruch 1,
dadurch gekennzeichnet, daß die Tellerfeder (16, 16', 16a) mit ihrem äußeren, umfangsseitigen axialen Rand (23, 23a) auf einem Abstimmteil (19, 19', 19a), vorzugsweise einer Abstimmscheibe, aufliegt.

3. Vorrichtung nach Anspruch 1 oder 2,
dadurch gekennzeichnet, daß die Zentrierfläche (17, 17a) auf einem gedachten Kegelmantel mit einem Kegelwinkel von vorzugsweise etwa 40° liegt.

4. Vorrichtung nach einem der Ansprüche 1 bis 3,
dadurch gekennzeichnet, daß das Positionierteil (4, 4a) mindestens teilweise kegel- oder kalottenförmig ausgebildet ist.

5. Vorrichtung nach einem der Ansprüche 1 bis 4,
dadurch gekennzeichnet, daß das Positionierteil (4) eine Kugel ist.

6. Vorrichtung nach einem der Ansprüche 2 bis 5,
dadurch gekennzeichnet, daß die Tellerfeder (16, 16', 16a) an der auf dem Abstimmteil (19, 19', 19a) liegenden Seite am äußeren Rand (23, 23a) eine Planauflagefläche (31, 31a) hat.

7. Vorrichtung nach einem der Ansprüche 1 bis 6,
dadurch gekennzeichnet, daß die Tellerfeder (16, 16', 16a) einen äußeren Zylindermantel (24, 24a) hat.

8. Vorrichtung nach einem der Ansprüche 1 bis 7,
dadurch gekennzeichnet, daß die Tellerfeder (16, 16', 16a) durch mindestens ein Sicherungsteil (18, 18', 18a) in der Vertiefung (3, 3', 3a') gehalten ist.

9. Vorrichtung nach Anspruch 8,
dadurch gekennzeichnet, daß zwischen der Tellerfeder (16, 16', 16a) und dem Sicherungsteil (18, 18', 18a) mindestens ein Vorspannelement (20, 20', 20a), vorzugsweise ein O-Ring, angeordnet ist.

10. Vorrichtung nach Anspruch 8 oder 9,
dadurch gekennzeichnet, daß sie zwei spiegelsymmetrisch zueinander und zur Fügefuge (8, 8a) angeordnete Positioniersätze, bestehend aus Abstimmteil (19, 19'), Tellerfeder (16, 16') und Sicherungsteil (20, 20') aufweist.

11. Vorrichtung nach einem der Ansprüche 1 bis 10,
dadurch gekennzeichnet, daß das Positionierteil (4) durch mindestens ein Halteteil (25), vorzugsweise einen Seegerring, lagegesichert ist.

12. Vorrichtung nach Anspruch 11,
dadurch gekennzeichnet, daß zwischen dem Halteteil (25) und der benachbarten Tellerfeder (16) ein weiteres Vorspannelement (27), vorzugsweise ein O-Ring, liegt.

## Claims

1. A positioning device for positioning two components (2, 2'; 2a, 2a') relative to one another, more particularly machine parts of machine tools, with two components (2, 2'; 2a, 2a') which on joining surfaces (8, 8a) comprise recesses (3, 3'; 3a, 3a'), with a positioning element (4, 4a) and at least one insertion element (16, 16', 16a) comprising a central opening, the positioning element and the insertion element lying in each case in the recesses (3, 3', 3a, 3a') in the components (2, 2'; 2a, 2a'), the positioning element (4, 4a) resting against the centring surface (17, 17a) formed by the edge of the opening and the insertion element (16, 16'; 16a) resting against the lateral wall of the recess (3, 3'; 3a') and being elastically deformable during the joining of the components (2, 2'; 2a, 2a'),
characterised in that the centring surface (17, 17a) is provided on a cup spring (16, 16'; 16a) as an insertion element, which is elastically deformed to its flattened shape during the joining of the components (2, 2'; 2a, 2a') and is supported with its outer edge (24, 24a) against the lateral wall of the recess (3, 3'; 3a').

2. A device according to claim 1, characterised in that the cup spring (16, 16', 16a) rests with its outer, circumferential axial edge (23, 23a) upon an aligning element (19, 19', 19a), preferably an aligning disc.

3. A device according to claim 1 or 2, characterised in that the centring surface (17, 17a) lies on an imaginary conical surface with an angle of inclination of preferably approximately 40°.

4. A device according to one of claims 1 to 3, characterised in that the positioning element (4, 4a) is at least partially conical or spherical.

5. A device according to one of claims 1 to 4, characterised in that the positioning element (4) is a sphere.

6. A device according to one of claims 1 to 5, characterised in that the cup spring (16, 16', 16a) has a flat bearing surface (31, 31a) on the outer edge (23, 23a) on the side resting against the aligning element (19, 19', 19a).

7. A device according to one of claims 1 to 6, characterised in that the cup spring (16, 16', 16a) has an outer cylindrical surface (24, 24a).

8. A device according to one of claims 1 to 7, characterised in that the cup spring (16, 16', 16a) is held in the recess (3, 3', 3a') by at least one securing element (18, 18', 18a).

9. A device according to claim 8, characterised in that at least one pre-tensioning element (20, 20', 20a), preferably an O-ring, is arranged between the cup spring (16, 16', 16a) and the securing element (18, 18', 18a).

10. A device according to claim 8 or 9, characterised in that it comprises two positioning sets, which are arranged so as to be mirror-symmetrical to one another and relative to the joining seam (8, 8a) and comprise the aligning element (19, 19'), the cup spring (16, 16') and securing element (20, 20').

11. A device according to one of claims 1 to 10, characterised in that the positioning element (4) is fixed in position by at least one retaining element (25), preferably a Seeger ring.

12. A device according to claim 11, characterised in that a further pre-tensioning element (27), preferably an O-ring, is arranged between the retaining element (25) and the adjacent cup spring (16).

## Revendications

1. Dispositif de positionnement destiné à positionner deux éléments (2, 2' ; 2a, 2a'), notamment des éléments de machines-outils, l'un par rapport à l'autre comprenant deux éléments (2, 2' ; 2a, 2a') qui présentent des cavités (3, 3' ; 3a, 3a') au niveau des surfaces de joint (8, 8a), un élément de positionnement (4, 4a) et au moins un élément rapporté (16, 16' ; 16a) présentant une ouverture centrale, l'élément ou les éléments rapporté(s) étant logé(s) dans les cavités (3, 3' ; 3a, 3a') des éléments (2, 2' ; 2a, 2a'), l'élément de positionnement (4, 4a) étant appuyé contre la surface de centrage (17, 17a) formée par le bord de l'ouverture, et l'élément rapporté (16, 16' ; 16a) étant appuyé contre la paroi latérale de la cavité (3, 3' ; 3a') et pouvant se déformer élastiquement au moment de l'assemblage des éléments (2, 2' ; 2a, 2a'),
caractérisé en ce que la surface de centrage (17, 17a) est prévue sur une rondelle Belleville (16, 16' ; 16a) utilisée comme élément rapporté, qui, au moment de l'assemblage des éléments (2, 2' ; 2a, 2a') se déforme élastiquement en direction de sa forme plate, et prend appui contre la paroi latérale de la cavité (3, 3' ; 3a') par son bord extérieur (24, 24a).

2. Dispositif selon la revendication 1,
caractérisé en ce que la rondelle Belleville (16, 16', 16a) est appuyée par son bord extérieur axial circonférentiel (23, 23a) sur un élément adaptateur (19, 19', 19a), de préférence sur une rondelle adaptatrice.

3. Dispositif selon la revendication 1 ou 2,
caractérisé en ce que la surface de centrage (17, 17a) se trouve sur une paroi latérale conique fictive présentant un angle de cône de préférence d'environ 40°.

4. Dispositif selon une des revendications 1 à 3,
caractérisé en ce que l'élément de positionnement (4, 4a) est d'une configuration au moins partiellement conique ou en calotte de sphère.

5. Dispositif selon une des revendications 1 à 4,
caractérisé en ce que l'élément de positionnement (4) est une bille.

6. Dispositif selon une des revendications 2 à 5,
caractérisé en ce que la rondelle Belleville (16, 16', 16a) présente une surface de portée plane (31, 31a) le long de son bord extérieur (23, 23a), sur le côté qui s'appuie sur l'élément adaptateur (19, 19', 19a).

7. Dispositif selon une des revendications 1 à 6,
caractérisé en ce que la rondelle Belleville (16, 16', 16a) possède une paroi extérieure cylindrique (24, 24a).

8. Dispositif selon une des revendications 1 à 7,
caractérisé en ce que la rondelle Belleville (16, 16', 16a) est retenue dans la cavité (3, 3', 3a') par au moins un élément de retenue (18, 18', 18a).

9. Dispositif selon la revendication 8,
caractérisé en ce qu'au moins un organe de précontrainte (20, 20', 20a), de préférence une bague torique,est disposé entre la rondelle Belleville (16, 16', 16a) et l'élément de retenue (18, 18', 18a).

10. Dispositif selon la revendication 8 ou 9,
caractérisé en ce qu'il comprend deux jeux de positionnement disposés symétriquement l'un par rapport à l'autre et par rapport à l'assemblage de joint (8, 8a), composés d'un élément adaptateur (19, 19'), d'une rondelle Belleville (16, 16') et d'un élément de retenue (20, 20').

11. Dispositif selon une des revendications 1 à 10,
caractérisé en ce que l'élément de positionnement (4) est maintenu en position par au moins un élément de retenue (25), de préférence par une bague d'arrêt.

12. Dispositif selon la revendication 11,
caractérisé en ce qu'un autre organe de précontrainte (27), de préférence une bague torique, est situé entre l'élément de retenue (25) et la rondelle Belleville (16) adjacente.
